# EUROPEAN PATENT APPLICATION

(11) **EP 1 139 316 A2**
(43) Date of publication of application: **04.10.2001**
(21) Application number: 01106860.8
(22) Date of filing: 20.03.2001
(51) Int. Cl.: G07G 5/00

(54) **System for and method of printing and issuing receipts and data storage medium**

(30) Priority: 27.03.2000 JP 2000087271
(71) Applicant: SEIKO EPSON CORPORATION, Shinjuku-ku, Tokyo 163-0811 (JP)
(72) Inventor: Minowa, Masahiro, Suwa-shi, Nagano-ken 392-8502 (JP)
(74) Representative: Hoffmann, Eckart, Dipl.-Ing.

(57) **Abstract**

In a terminal system having a printing function for printing additional information about special events, introductions, or advertising on sales receipts issued by a convenience store or kiosk when a purchase is made, or on queuing number tickets issued to customers waiting in a bank, customers can select information of personal interest from a list of advertising information so that the selected information is printed to the receipt or ticket issued by the system. A terminal (10) of a POS system having an input device (12), a printer (19), a display (13), and controller for use in various applications comprises a display (16) for presenting plural advertising information entries, a means (16) for selecting desired entries from the displayed list, and a means (19) for printing the selected information on a receipt issued by the terminal device. Information wanted by the customer can thus be selectively printed with the sales transaction information normally printed on the receipt that is handed to the customer.

## Description

The present invention relates to a method and a system for printing and issuing receipts wherein the receipts, in addition to fulfilling their normal purpose, are used as an advertising medium.

The term "receipt" as used in this text refers to any medium that is issued for and received by an individual person and has information printed on it that is of particular interest mainly to that person and typically of no interest to other persons. This information will be referred to as "receipt information" hereinafter.

Examples of such "receipts" include, in particular, the sales receipts that are issued by a POS system or sales register printer in which case the "receipt information" typically comprises the type, amount and price as well as the sum total of purchased products, and various kinds of tickets including queuing number tickets such as those issued by queuing number printers used in banks, securities companies, and hospitals to issue numbers for serving customers in order. In case of a queuing number ticket, the queuing number represents the "receipt information", while in case of a public transportation system ticket, the "receipt information" includes the fare and, maybe, the date of issuance or use.

Because such receipts are individually printed and handed to individuals they lend themselves to the additional use as a vehicle to convey advertising information. "Advertising information" (simply abbreviated as "ad" hereinafter) as the term is used in this text covers all types of information that is typically not related to the particular transaction or event that caused the receipt to be issued, but may be of interest, among others, to the person receiving the receipt. Commercial as well as non-commercial advertisements are examples of such ads.

EP-A-1 035 527 discloses a system according to the pre-characterizing portion of claim 1 and a method according to the pre-characterizing portion of claim 9. More particularly, EP-A-1 035 527 describes a POS system that can print an ad in addition to receipt information on a sales receipt issued by the system. Ads to be printed on the sales receipts can be input through a data entry terminal, for example, that is located in the store. The system can directly provide individual local residents with advertisements and information about local events, such as community chess tournaments or karaoke singing contests.

In the known POS system a plurality of ads are stored in a storage device and the ad to be printed on a particular receipt is automatically selected from that plurality based on customer information, such as the age range, sex etc. of the respective customer. Such customer information is input by the POS operator (clerk, for example). Whether the ad printed on the receipt is of any particular interest to the customer receiving the receipt is therefore unknown.

If the ad printed on the receipt is of real interest to the customer receiving it, the customer can be expected to read the ad with care, making the advertisement extremely effective. Such receipt can be a powerful advertising medium depending on how it is used, because the receipts are handed one at a time to a single customer.

As mentioned before, many systems that generate a receipt (printed medium) to serve a certain main purpose, such as a sales receipt, a ticket etc., can additionally be employed for advertisement purposes. Such systems can be additionally operated as an advertising system, and the value of such an advertising system is potentially very powerful. ATMs and parking lot ticket printers are other examples of such systems. Systems such as these that issue receipts having a potential as advertising media are already commonly used and there is widespread interest in actually using these media for advertising purposes.

Each of these potential advertising media (receipts) is passed individually to a single customer, and the success of the system as an advertising system therefore depends on how successfully information (ads) of interest can be provided to individual customers.

An object of the present invention is to provide a receipt printing and issuing system and method capable of selecting ads of the greatest possible interest to a respective customer for printing on a receipt issues to that customer.

This object is achieved with a system as claimed in claim 1, a method as claimed in claim 8 and a computer-readable storage medium as claimed in claim 15.

In accordance with the invention customers is offered a list of different ads so that each customer can select one or more of these ads according to his particular interest. This provides a good match between the individual customer's interest and the ad(s) printed on his receipt and, thus, ensures effective advertising.

In a preferred embodiment of the invention the customer is given a certain time (waiting time) during which the system waits for a selection. If no ad is selected within the waiting time, the system automatically selects one or more ads to prevent the whole system from becoming blocked for a long time.

In a preferred embodiment of the invention the list of ads presented as selection menu to the customer includes a sub-group of ads pre-selected from the ads available in the system. The pre-selection may be based on information about the respective customer, such as the age range, the sex etc. where such customer information can be input into the system. The pre-selection may, alternatively, be performed statistically or based on other information such as the time of the day. The purpose of the pre-selection is to have, from the total of available ads, those in the list presented to a respective customer that have the highest probability of being of interest to that customer.

Other objects and attainments together with a fuller understanding of the invention will become apparent and appreciated by referring to the following description of preferred embodiments of the invention taken in conjunction with the accompanying drawings, in which:
- Fig. 1(a): is a front perspective view of POS terminal using the present invention,
- Fig. 1 (b): is a back perspective view of the POS terminal;
- Fig. 2: is a block diagram showing the POS terminal in Fig. 1 in greater detail;
- Fig. 3: shows a POS system comprising a store server and plural POS terminals connected thereto;
- Fig. 4: is a function block diagram showing the basic functions of a POS system according to a first preferred embodiment of the present invention;
- Fig. 5: shows a queuing number issuing device in which the present invention is used;
- Fig. 6: is a flow chart of a process for displaying a selection menu and for selecting an item from the menu in a POS system according to the present invention;
- Fig. 7: is a flow chart of a financial transaction process;
- Fig. 8: is a flow chart of a process for combining receipt (purchase) information and advertisement information and for printing the combined information on a receipt;
- Fig. 9: shows an exemplary selection menu displayed on an information selection device;
- Fig. 10: shows an exemplary sales receipt having an ad printed below transaction data;
- Fig. 11: shows an exemplary sales receipt having plural blocks of ads printed below transaction data with the ads printed reduced in scale;
- Fig. 12: shows another example of a sales receipt in which the ad is printed above the transaction data; and
- Fig. 13: shows an exemplary queuing number ticket having an ad printed below the queuing number.

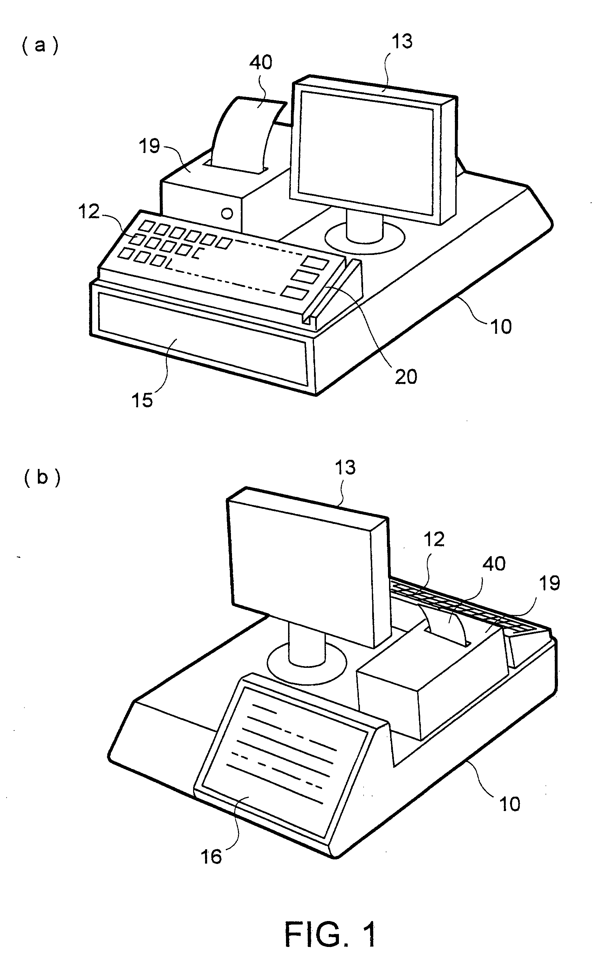

Fig. 1 (a) is an perspective view from the front of a cash register for a POS system (referred to below as POS terminal 10) used in one embodiment of the present invention. Referring to Fig. 1, the POS terminal operator enters product information and customer information using a keyboard 12. Also shown in Fig. 1 are an operator display 13, a cash drawer 15, and a printer 19. A receipt 40 is issued by means of printer 19 after a transaction process is completed. One or more ads such as described above can be printed on the receipt 40. A card reader 20 is used for reading a credit card or other type of magnetic strip card.

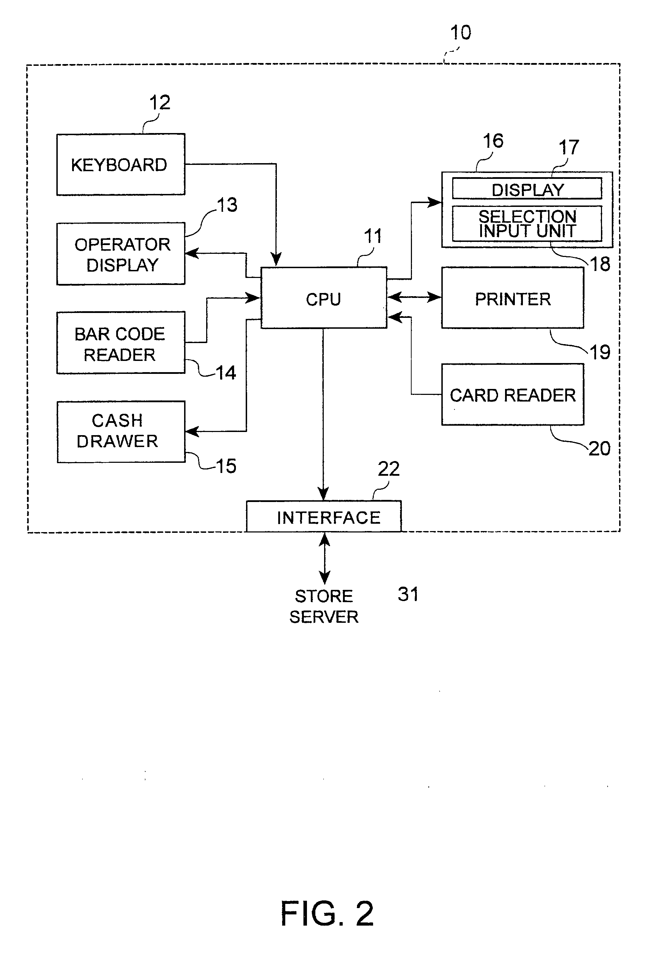

Fig. 1 (b) is a perspective view from the back of the POS terminal 10 shown in Fig. 1 (a). Shown in Fig. 1 (b) is an information selector 16. The information selector 16 has a display 17 and selection input unit 18 (see Fig.2). In this exemplary embodiment the information selector 16 is formed by a display 17 with a touch screen as the selection input unit 18. A selection menu of ads that a customer can select from is presented on the display 17. The customer can select one or more ads using the selection input unit 18. The ad(s) selected by the customer is (are) then printed on the receipt 40.

Fig. 2 is a block diagram showing the configuration of the POS terminal 10 in Fig. 1 in greater detail. While not shown in Fig. 2, it will be appreciated that POS terminal 10 having a CPU 11 also contains ROM, RAM, or other memory, and a storage device such as a hard disk. Connected to the CPU 11 are keyboard 12, operator display 13, bar code reader 14, cash drawer 15, information selector 16, printer 19, and card reader 20. The CPU 11 controls the various components of the POS system according to the operating system and other software stored in the internal memory. The CPU 11 is also connected to a server 31 by way of an interface 22.

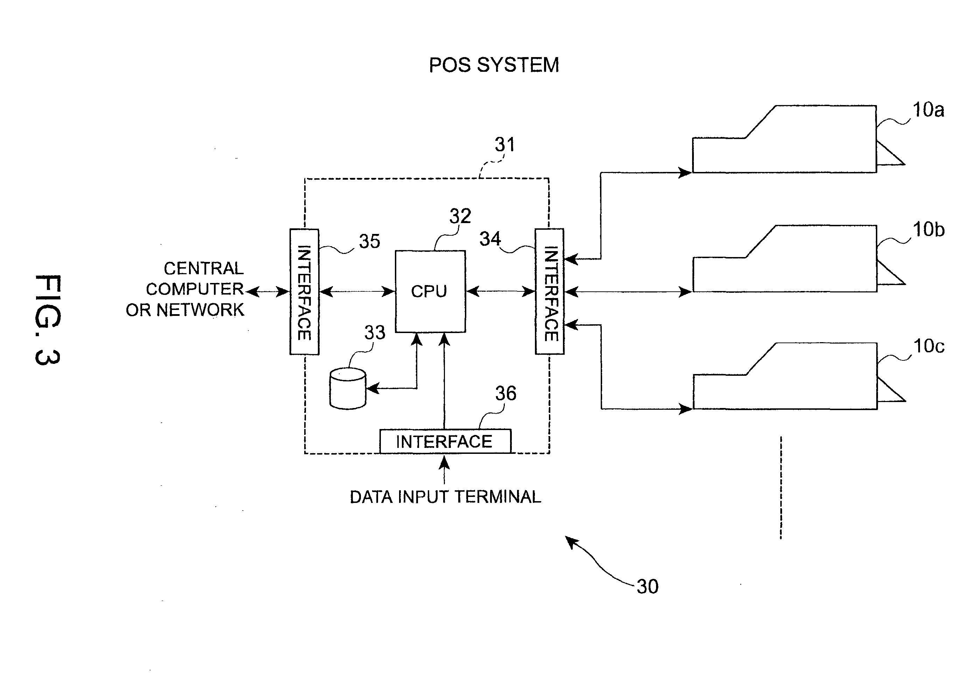

Fig. 3 shows a POS system 30 comprising a store or local server 31 and a plurality of POS terminals 10 (three terminals 10a to 10c are shown) connected to the server 31.

Like POS terminal 10, server 31 comprises a CPU 32, ROM, RAM, disk storage, or other type of memory (not shown in the figure). Storage device 33, which is typically a hard disk or other relatively high capacity random-access storage device, is connected to and controlled by the CPU 32.

CPU 32 is connected to POS terminal 10 by way of a first interface 34, and is connected by way of a second interface 35 to a central computer or network server (not shown in the figure). Updated product data and data representing ads for printing on the receipts are sent to store server 31 from the central computer or network server.

CPU 32 is connected to a data input terminal by way of a third interface 36. Note that the data input terminal is not shown in the figures as it is not an essential element of the present invention. The data input terminal receives requests for ads to be printed on the receipts 40, and sends the data representing those ads to the store server 31.

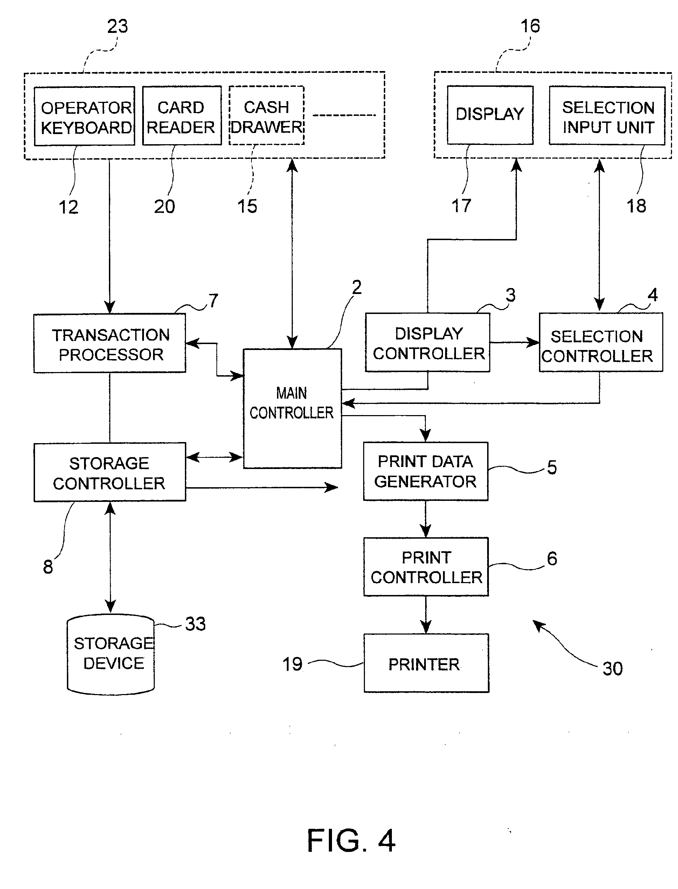

Fig. 4 is a block diagram showing the basic functions of a POS system 30 according to a preferred embodiment of the present invention. The functions of control means 2 to 8 in Fig. 4 are achieved by connecting the POS terminal 10 and server 31, that is, by the interaction of the software, including the OS, stored in internal memory and CPUs 11 and 32 in Fig. 2 and Fig. 3.

The POS system 30 comprises a main controller 2 for controlling the overall operation of the POS system 30. Various sub-controllers, including a display controller 3, selection controller 4, print data generator 5, print controller 6, transaction processor 7, and storage controller 8, and an I/O device 23, are connected to the main controller 2. Information selector 16 is connected to display controller 3 and selection controller 4.

When a customer comes to the operator with a product to purchase, the operator first uses the keyboard 12 to enter specific customer data, such as the customer's age range and sex. The main controller 2 then sends this customer data to the storage controller 8. Based on this customer data, the storage controller 8 searches the data representing ads in the storage device 33 to pre-select those of the ads that can be assumed to be of particular interest to a customer in the respective age range and/or of the respective sex and/or other customer information that may have been input. A selection list representing the pre-selected ads appropriate to that customer is compiled.

The selection list is sent to main controller 2, and from there to the display controller 3. The display controller 3 then presents the selection list as a selection menu on the display 17 of information selector 16. The display controller 3 also notifies the selection controller 4 when it starts displaying the selection menu. Selection controller 4 enables the selection input unit 18 when this notice is received from the display controller 3. The customer is thus allowed, preferably for a limited waiting time, to select a desired ad from the selection menu. When the customer selects a desired ad by means of the selection input unit 18, the selection is output to selection controller 4.

The selection controller 4 notifies the main controller 2 if a selection has been received from the selection input unit 18 of information selector 16. The main controller 2 then reads the data representing the selected ad(s) from storage device 33 by way of storage controller 8, and sends the data to the print data generator 5. The print data generator 5 combines this data with the transaction data from a transaction process so that a receipt 40 can be printed and issued from the printer 19 under the control of print controller 6.

The transaction processor 7 is a function typical for a POS system or other sales transaction processing terminal, and typically sequentially registers the sale of each product. To register a product transaction, a bar code label applied to each product is typically scanned or the information on it is otherwise entered; the product price is then fetched from storage device 33, and the name, price, and quantity of the product are stored; the purchased quantity is subtracted from the inventory data.

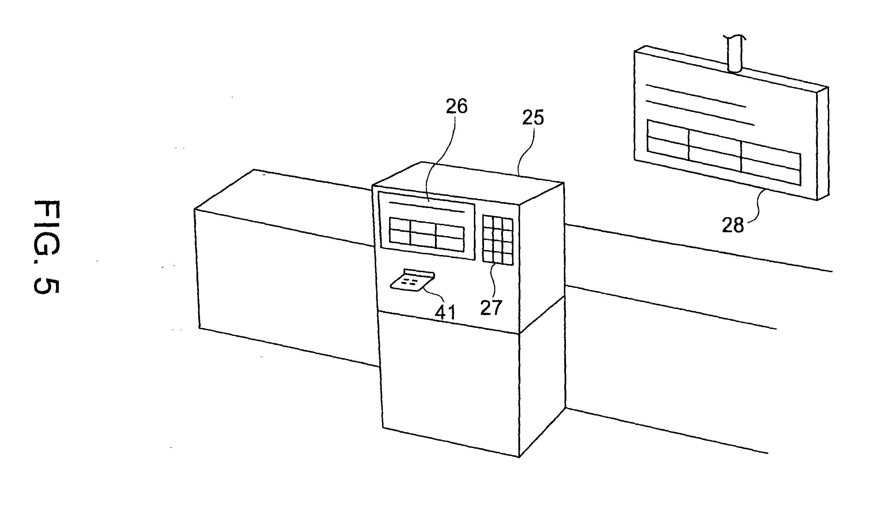

A queuing number printer 25 using the present invention is shown in Fig. 5. This type of queuing number printer 25 is typically used in banks, securities companies, hospitals, meat shops, delicatessens, and similar establishments serving customers in order on a first-come-first-serve basis. Like the POS system, this queuing number printer 25 is also connected to a server (not shown in the figure). A selection menu of ads is shown on display 26, and a desired selection can be entered using the input unit 27.

In the embodiment shown, the input unit 27 is implemented as a touch screen provided on display 26, which makes it possible to reduce the space needed for the queuing number printer 25. Queuing number ticket 41 is a numbered ticket issued by the queuing number printer 25. It should be noted that customer information is not entered with this queuing number printer 25, which is therefore preferably comprised to automatically display a particular selection menu.

The items on the selection list can be randomly selected. Alternatively, the list could be generated by analyzing the typical customers at particular times of the day based on statistical data so that the list varies according to the likely customers at a given time. An employee or other operator could also analyze the customers present at a particular time of day, and appropriately change the selection list according to the customers.

A large-scale display 28 can be mounted on the wall or ceiling of a waiting room, for example, for displaying the selection menu and other information. People waiting in a waiting room are a captive audience with available time, and are likely to read information even if only slightly interesting. The desired information can be output on the queuing number printer 25 when a particular button is pressed, for example, or a completely separate output device could be used.

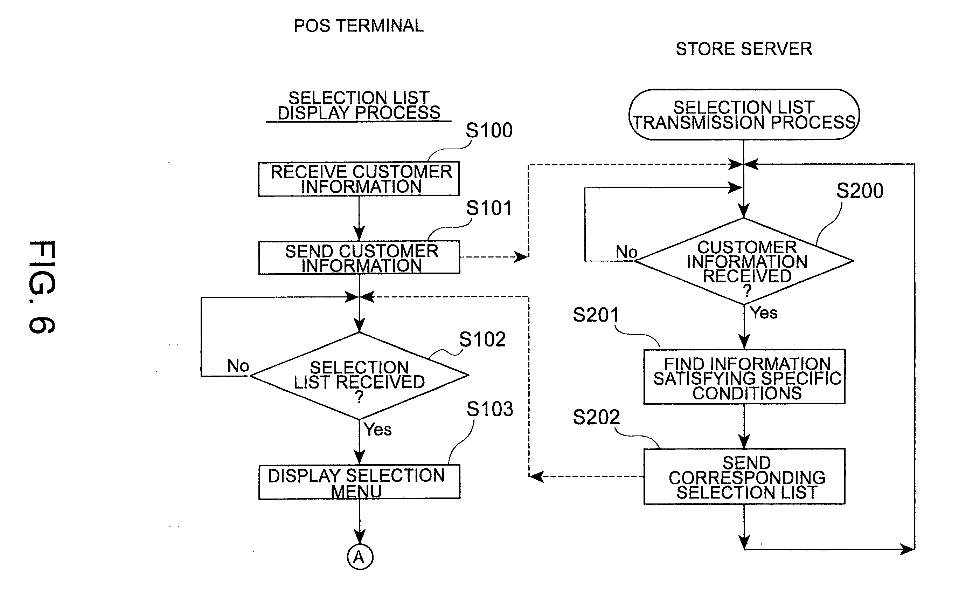

A process for displaying the selection menu and enabling a selection to be input in a POS system 30 according to the present invention is described next with reference to Fig. 6.

When a customer brings a product to the POS terminal 10 to make a purchase (transaction), the operator (clerk) first enters the age range, sex, and/or other customer information on the keyboard 12, and the CPU 11 of POS terminal 10 waits for this data input (S100). When the CPU 11 receives the customer information, it sends the information to server 31 (S101). When the server 31 receives the customer information (S200 returns *Yes),* it searches the storage device 33 for ads that match the customer information to compile the selection list (S201).

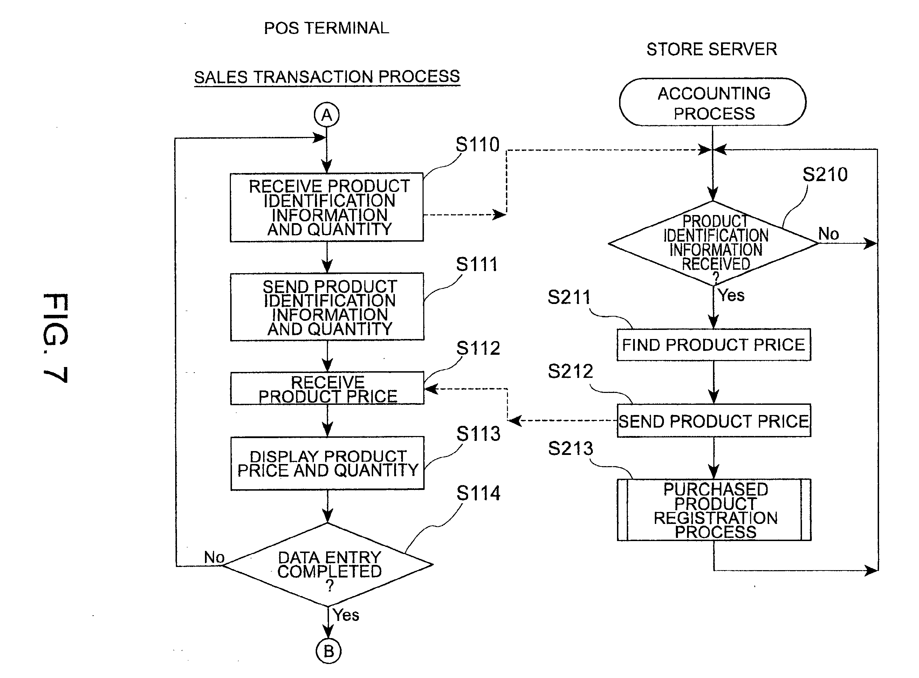

When the search is completed, a list of selectable ads pre-selected by the search is sent to the POS terminal 10 (S202). The POS terminal 10 receiving the selection list from server 31 (S102 returns *Yes*) presents the corresponding selection menu on information selector 16 and enables the user to select an item (ad) (S103). When the selection menu display process ends at this point, control proceeds to S110 in process A shown in Fig. 7.

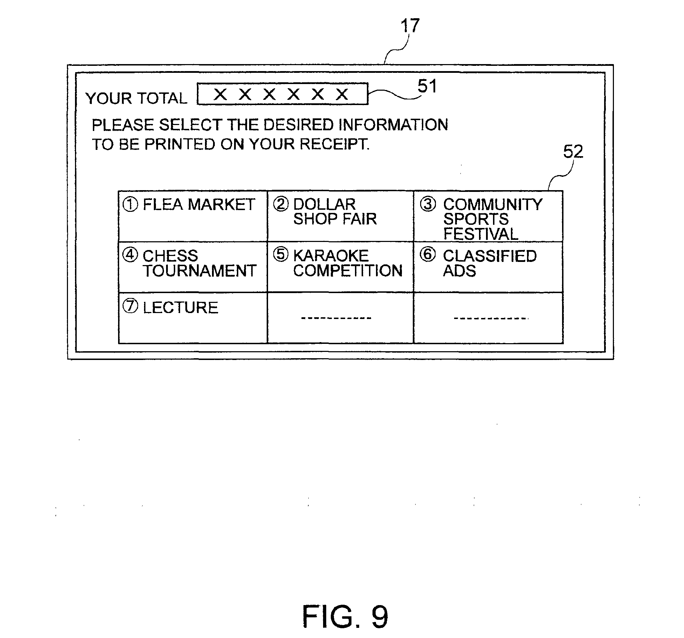

An exemplary selection menu presented on information selector 16 is shown in Fig, 9. A transaction amount 51 is displayed on the top line of the screen on display 17 of information selector 16. This transaction amount is the transaction total accumulated each time a purchase transaction is registered. The selection menu is shown by reference numeral 52 in Fig. 9. Items 1 to 7 are available in this example. The customer can select one or more desired items. Various selection entry means could be used. In this embodiment, however, the screen part corresponding to the selection menu 52 is a touch screen so that when the menu items are arranged in a matrix such as shown in Fig. 9, the customer can simply touch the desired item to make his selection. As a result of the above-described process, only ads appropriate to the receipt-receiving person (that is, the customer) are presented on the selection menu, thereby making it possible to print ads that are appropriate to the customers.

A transaction process is described next with reference to Fig. 7. A transaction process is only appropriate in a POS system or other device used for handling monetary transactions.

When the operator enters product identification and quantity information using a bar code reader 14 and/or keyboard 12, for example, to start the transaction, this information is input into the CPU 11 (S110) and sent thereby to the server 31 (S111).

When the server 31 receives the product identification information (S210 returns *Yes),* it finds the product price in the product database stored in storage device 33 (step S211), and sends this price information to the POS terminal 10 (S212). The server 31 then runs the transaction process for the purchased product (S213), and waits for the next product transaction process (S210).

POS terminal 10 receives the product price information (S112), and displays the price information on operator display 13, display 17 of information selector 16, and a customer display unit (not shown in the figure) (S113).

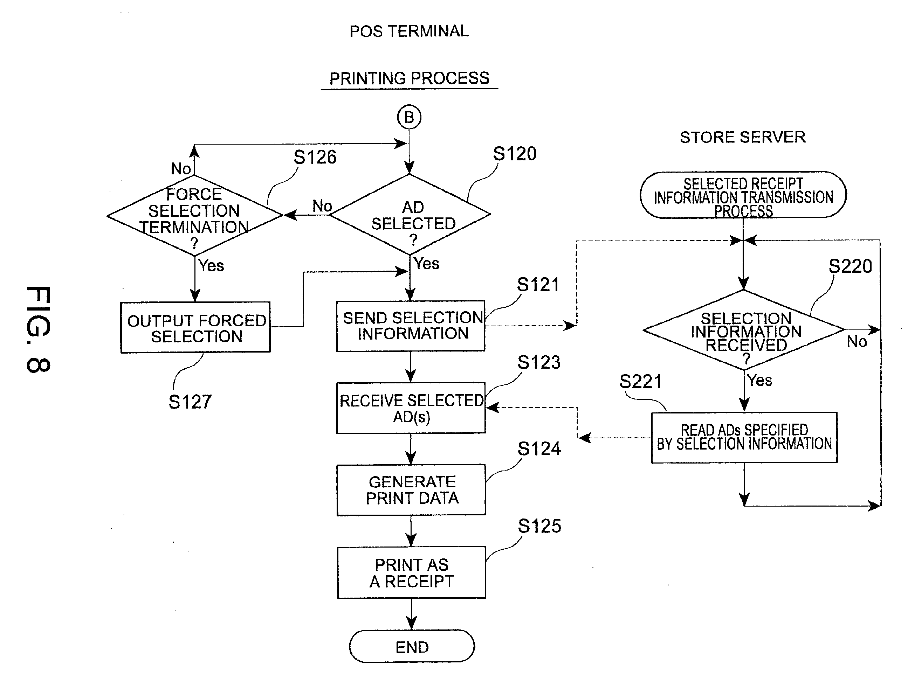

It is then determined whether entering product identification information has been completed (S114). Entering the product identification information has been completed if, for example, the operator presses a total key on the keyboard 12. If data entry is not over (step S114 returns *No),* the procedure loops back to step S110. If data entry is over (step S114 returns *Yes),* control continues with the printing process shown in Fig. 8 and indicated as routine (B) in Fig. 7.

The printing process is described next with reference to Fig. 8. Fig. 8 is a flow chart of a printing process for combining the transaction data with the ad data, and then printing receipt 40.

When the product registration process shown in Fig. 7 ends, CPU 11 determines whether an ad has been selected by means of the selection input unit 18 (S120). If an ad has been selected (S120 returns *Yes*), the selection information is sent to server 31 (S121).

If no ad has been selected (S120 returns *No),* whether to force termination of selection input is determined. If termination is not forced (S126 retums *No),* the procedure again waits for a selection to be entered (S120). If selection input is to be forcibly terminated (S126 returns *Yes)* because the selection input standby time has exceeded a predetermined limit (waiting time), for example, a predetermined default selection is made and corresponding information is output (S127).

When the server 31 receives selection information (S220 returns *Yes*), data representing the selected ad(s) is read from storage device 33 and is sent to POS terminal 10. CPU 11 of POS terminal 10 then receives that data (S123).

The POS terminal 10 then combines the ad data received in step S123 and the transaction data generated in steps S110 to S113 in Fig. 7 to generate the print data (S124), and prints receipt 40 by means of printer 19 (S125), whereupon the printing process ends. Various methods of combining the two types of data are possible, including setting aside a printing area on the receipt 40 for the ad(s) and printing the ad(s) in this area, or first printing the ad(s) and then printing the transaction information.

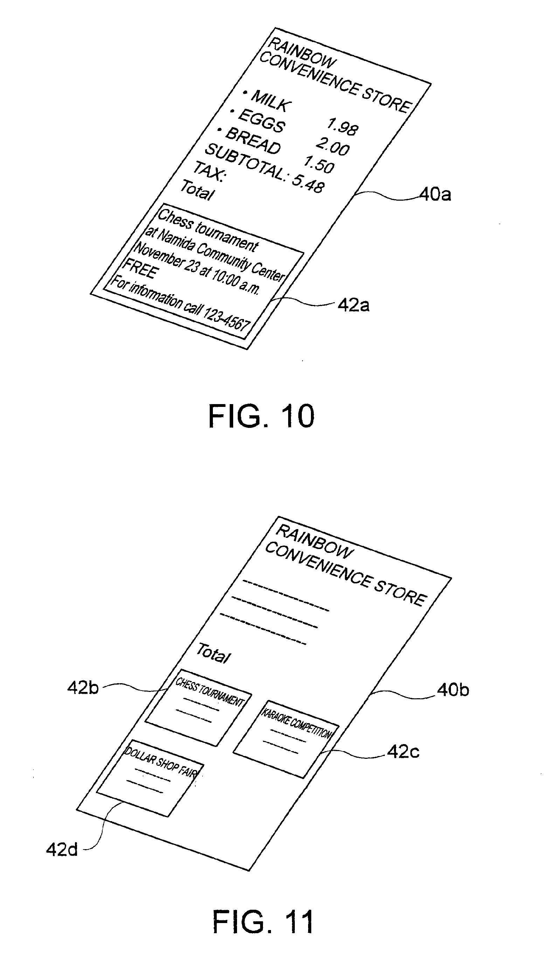

Print samples of a sales receipt 40 and a queuing number ticket 41 are shown in Fig. 10 to Fig. 14.

Fig. 10 shows an exemplary sales receipt 40a having an ad 42a printed below the transaction data. Fig. 11 shows another sales receipt 40b likewise having ads printed below the transaction information. In this case, however, plural ad blocks 42b to 42d are printed at a reduced size. It is thus also possible to enable plural selections with each selection printed reduced in size, in which case the print data generator 5, for example, composes the print data with the ad reduced a specific percentage.

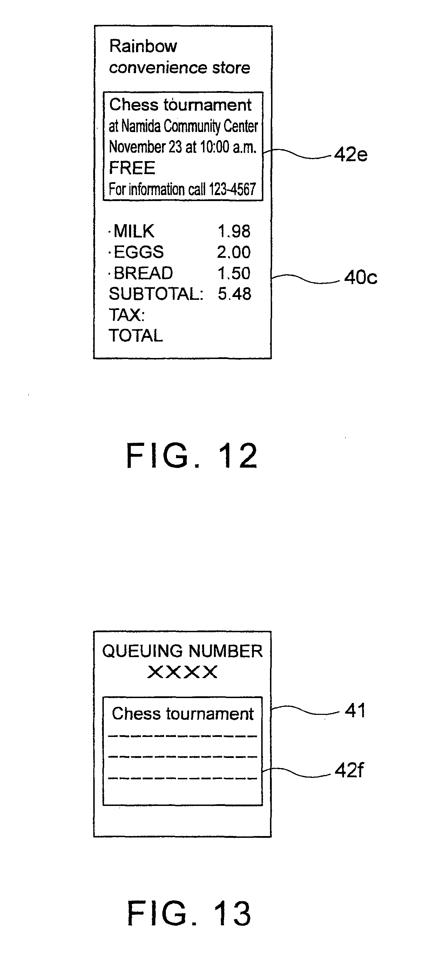

Fig. 12 shows an example in which an ad 42e is printed at the top of a receipt 40c, and Fig. 13 shows an example in which an ad 42f is printed below the number on a queuing number ticket 41.

As will be appreciated from the preceding description, it is possible with the present invention to provide a receipt printing and issuing system and method, and a data storage medium whereby ads of particular interest to a customer receiving a receipt can be provided. It is therefore possible to print ads of real interest to the customer on a receipt that is handed to the customer. Because the customer receiving this can be expected to read the information with interest, it is possible to perform effective advertising. Being able to provide ads matching the interests of individual customers is extremely effective because media of this type is reliably hand delivered individually to the customer.

## Claims

1. A receipt printing and issuing system having
an input device (12),
a display device (13, 17; 26, 28),
a storage device (33),
storage control means (2, 8) for receiving and storing, in said storage device (33), a plurality of items of advertising information, and for reading stored advertising information as requested,
selection control means (2, 4, 18) for selecting one or more of said plurality of items of advertising information, and for requesting said storage control means (2, 8) to read the selected items from the storage device (33),
print data generating means (5) for generating print data combined from first and second data, the first data representing receipt information obtained on the basis of data entered via said input device (12), and the second data representing one or more selected items of advertising information, and
a printing device (6, 19) for printing said print data on a printing medium,
**characterized in that**
the storage control means (2, 8) is adapted to compile, from said stored plurality of items of advertising information, a list of items that satisfy a particular condition,
display control means (2, 3) is provided for displaying said list of items of advertising information, and
the selection control means (2, 4, 18) is adapted to receive input selecting one or more items from the displayed list, and for requesting the storage control means (2, 8) to read data representing said one or more items of advertising information specified by said input from the storage device (33), and to send the read data as said second data to the print data generating means (5).

2. The system of claim 1, wherein said particular condition is determined based on information entered via said input device (12).

3. The system of any one of the preceding claims, wherein the selection control means (2, 4, 18) is adapted to request the storage control means (2, 8) to read the data of one or more predetermined items of advertising information from said storage device (33) if no selection input is received within a predetermined waiting time.

4. The system of any one of the preceding claims, wherein the print data generating means (5) is adapted, when plural items of advertising information have been selected, to generate said print data such that the plural items of advertising information are printed in a reduced size compared to the size in which a single selected item of advertising information is printed.

5. The system of any one of the preceding claims, wherein the storage control means (2, 8) receives and said advertising information input over a network and stores it in the storage device (33).

6. The system of any one of the preceding claims implemented as a purchase transaction processing system (30) having accounting information control means (7) for registering a product purchase by a customer and outputting accounting information as said receipt information.

7. The system of any one of claims 1 to 5 implemented as a customer ticket issuing system having queuing number control means (25) for managing queuing numbers and outputting a queuing number as said receipt information.

8. A method of printing and issuing a receipt having both receipt information and advertising information printed thereon, comprising the steps of
(a) obtaining first data representing said receipt information,
(b) reading from a storage device (33), as second data, data representing said advertising information,
(c) generating print data combined from said first data obtained in step (a) and the second data obtained in step (b), and
(d) printing the print data generated in step (c) on a printing medium to obtain the receipt,
**characterized by** the steps of
(e) displaying a list items of advertising information stored in said storage device (33) and available for printing, and
(f) receiving input selecting one or more items from the displayed list,
wherein step (b) comprises reading from said storage device (33), as said second data, data representing the one or more items of advertising information specified by the input received in step (f).

9. The method method of claim 8, wherein step (e) comprises pre-selecting from a plurality of items of advertising information stored in said storage device (33) those that satisfy a particular condition and compiling said so as to include the pre-selected items of advertising information.

10. The method of any one of claims 8 or 9, further comprising the step of
(g) updating the stored advertising information with advertising information input via a network.

11. The method of any one of claims 8 to 10, wherein
step (f) comprises waiting for input for a predetermined waiting time and, if no input is received within the waiting time, automatically selecting one or more items of advertising information, and
step (b) comprises reading from the storage device (33), as said second data, data representing said automatically selected one or more items of advertising information.

12. The method of any one of claims 8 to 11, wherein step (c) comprises generating said print data, when plural items of advertising information have been selected in step (f), such that the plural items of advertising information are printed in a reduced size compared to the size in which a single selected item of advertising information is printed.

13. The method of any one of claims 8 to 12, further comprising the steps of
(h) registering a product purchase by a customer and outputting accounting information as said receipt information.

14. The method of any one of claims 8 to 12, further comprising the step of
(i) managing queuing number output and outputting a queuing number as said receipt information.

15. A computer-readable data storage medium carrrying computer program means for implementing the steps of the method as defined in any one of claims 8 to 14.
